# EUROPÄISCHE PATENTSCHRIFT

(11) **EP 0 748 943 B1**
(45) Veröffentlichungstag und Bekanntmachung des Hinweises auf die Patenterteilung: **19.04.2000**
(21) Anmeldenummer: 96109292.1
(22) Anmeldetag: 11.06.1996
(51) Int. Cl.: F16B 19/10, F16B 13/12

(54) **Befestigungsanker**
Fastening anchor
Boulon d'ancrage

(30) Priorität: 14.06.1995 DE 29509726 U
(43) Veröffentlichungstag der Anmeldung: 18.12.1996
(73) Patentinhaber: EJOT VERBINDUNGSTECHNIK GmbH & Co. KG, D-57334 Bad Laasphe (DE)
(72) Erfinder: Kross, Manfred, 58642 Iserlohn-Letmathe (DE)
(74) Vertreter: Eisenführ, Speiser & Partner

(56) Entgegenhaltungen:
- EP-A- 0 042 573
- DE-A- 3 105 036
- GB-A- 594 859
- GB-A- 2 094 695
- GB-A- 2 193 550

## Beschreibung

Die Erfindung betrifft einen Befestigungsanker zum Anbringen eines Bauelements, insbesondere eines Fensterrahmens, an einer Wand oder dgl., mit einem im wesentlichen rohrförmig zylindrischen Befestigungskörper, der im Bereich seines ersten Endes einen Ankerabschnitt zur Verankerung in der Wand und im Bereich seines zweiten Endes einen Halteabschnitt zum Halten des Bauelements sowie in seinem Inneren Mittel (Aufweitkörper) aufweist, durch deren axiale Längsverschiebung der Befestigungskörper sowohl im Bereich des Halteabschnitts als auch im Bereich des Ankerabschnitts im wesentlichen radial aufweitbar ist, wobei die Aufweitmittel eine mit Aufweitkörpern verbundene, in der Einbaulage durch ein Werkzeug beaufschlagbare Stange enthalten.

Es ist häufig notwendig, ein Bauelement im Abstand von einer Wand o. dgl. anzubringen und deshalb vor seiner endgültigen Fixierung auszurichten. Hierzu wird das Bauelement mit dem Befestigungsanker vorläufig an der Wand angebracht, daraufhin ausgerichtet und anschließend endgültig befestigt. Wird beispielsweise eine Schraube als Befestigungsanker verwendet, so kann das Bauelement durch die Schraube vorläufig an der Wand befestigt werden. Muß das Bauelement danach jedoch ausgerichtet werden, so ist dies mit eingedrehter Schraube nicht möglich, da das Gewinde der Schraube eine Längsbewegung des Bauelements in Achsrichtung der Schraube und/oder eine Schwenkbewegung um die Schraubenachse nicht gestattet. Es ist deshalb notwendig, die Schraube wieder aus dem Bauelement herauszudrehen, das Bauelement auszurichten und anschließend die Schraube wieder in das Bauelement einzudrehen, um dieses gegenüber der Wand zu fixieren. Hierbei kann es vorkommen, daß sich das bereits ausgerichtete Bauelement wieder verschiebt, so daß dann entweder das Bauelement in einer falschen Lage an der Wand befestigt wird oder ein Neuausrichten notwendig ist.

Die vorstehend erläuterten Schwierigkeiten können beispielsweise bei Blendrahmen für Fenster auftreten. Weil diese im allgemeinen einen Abstand zur Wand haben, ist es notwendig, den Befestigungsanker so zu gestalten, daß im Bereich des Bauelements eine sichere Befestigung möglich ist, da in einem solchen Fall das Bauelement nicht allein durch die Verspannung etwa zwischen einem Ankerkopf und der Wand gehalten werden kann.

Aus der DE-A-31 05 036 ist bereits ein spreizbarer Dübel für die Befestigung von Rahmen, insbesondere Fensterrahmen, an Mauerwerk bekannt, der eine Dübelhülse aufweist, die durch einen einschlagbaren Dübelkern sowohl im Bereich des Mauerwerks als auch im Bereich des Rahmens aufgeweitet werden kann und somit arretierbar ist. Da das Aufweiten der Dübelhülse durch Einschlagen des Dübelkerns erfolgt, besteht die Gefahr, daß durch unachtsames oder übertriebenes Einschlagen die Ausrichtung des zu befestigenden Rahmens oder dgl. im Bezug auf die dahinterliegende Wand verlorengeht und kaum oder nur mit Mühe zu korrigieren ist.

Darüberhinaus ist es aus der GB-A-594 859 bekannt, plattenförmige Bauteile nach der Art der Blindniet-Technik miteinander zu verbinden, wobei ein Aufweiten eines Befestigungskörpers durch Zug an einem Aufweitkern erfolgt. Der Aufweitkern ist hierbei mit einer Zugstange über eine Sollbruchstelle verbunden, die bei größer werdender Zugkraft abreißt und somit ein Abtrennen der Zugstange bewirkt.

Es ist Aufgabe der vorliegenden Erfindung, einen Befestigungsanker der eingangs genannten Art zu schaffen, der das Ausrichten des Bauelements und seine sichere Fixierung auf einfache Weise gestattet.

Die vorstehende Aufgabe wird dadurch gelöst, daß bei einem Befestigungsanker der eingangs genannten Art die Stange eine Zugstange und der Befestigungskörper mit den Aufweitkörpern im Halteabschnitt blindnietartig ausgebildet ist. Eine alternative Ausführungsform ist dadurch gekennzeichnet, daß die Stange eine Zugstange und diese mit einer die Aufweitmittel bildenden Hülse zu gemeinsamer Längsverschiebung verriegelt ist.

Das Bauelement kann somit im Bereich des Halteabschnitts des Befestigungskörpers zunächst ausgerichtet werden, alsdann erfolgt insoweit die Fixierung durch das Aufweiten des Befestigungskörpers im Halteabschnitt und im Ankerabschnitt.

Bei der ersten Lösung ist also der Aufweitkörper mit der Stange durch eine Sollbruchstelle verbunden. Wird die Stange - die in der Einbaulage des Befestigungsankers im allgemeinen über das freie Ende des Befestigungskörpers vorsteht - mit Hilfe eines Zugwerkzeuges erfaßt und nach dem Ausrichten des Bauelements relativ zur Wand o. dgl. herausgezogen, dann fixiert der Aufweitkörper das Bauelement durch Aufweiten des Befestigungskörpers gegenüber dem Bauelement sowie mit Hilfe des weiteren Aufweitkörpers den Befestigungskörper in der Wand. Ist eine ausreichend form- oder auch nur kraftschlüssige Verbindung erzielt, so steigt die Zugkraft in der Sollbruchstelle zwischen dem Aufweitkörper und der Stange stark an, und die Stange wird vom Aufweitkörper losgerissen.

Bei der Alternativlösung, bei der als Aufweitkörper eine - in den rohrförmigen Befestigungskörper konzentrisch eingeschobene - Hülse verwendet und mit der Zugstange zu gemeinsamer Längsverschiebung verriegelt ist, dient ein durch eine Sollbruchstelle mit der Stange verbundener Riegelkörper dann lediglich zum Längsverschieben der Hülse, welche das Aufweiten des Befestigungskörpers bewirkt. In diesem Falle kann man die Anordnung auch so treffen, daß die Verriegelung lösbar und die Stange aus der Hülse herausziehbar ist. Letztere kann alsdann erneut als Betätigungswerkzeug eingesetzt werden.

Vorteilhafte Ausgestaltungen der Erfindung sind den Unteransprüchen zu entnehmen.

Die Zeichnung erläutert die Erfindung an Ausführungsbeispielen. Es zeigt:
- Fig. 1a, b: ein erstes Ausführungsbeispiel des erfindungsgemäßen Befestigungsankers in der vorläufigen sowie derendgültigen Einbaulage;
- Fig. 2: ein zweites Ausführungsbeispiel des erfindungsgemäßen Befestigungsankers in der vorläufigen Einbaulage;
- Fig. 3a, b: ein drittes Ausführungsbeispiel des erfindungsgemäßen Befestigungsankers, und zwar vor dem Einbau sowie in der endgültigen Einbaulage;
- Fig. 4: eine Endansicht des Befestigungsankers in Fig. 3a (von links);
- Fig. 5: einen abgebrochenen Längsschnitt durch einen ähnlichen Befestigungsanker wie in Fig. 3a (ohne Betätigungselement);
- Fig. 6: einen Querschnitt gemäß der Linie VI-VI in Fig. 5; und
- Fig. 7: ein zum Befestigungsanker der Fig. 5 und 6 gehörendes Betätigungselement in Seitenansicht (und eingezeichnetem Querschnitt).

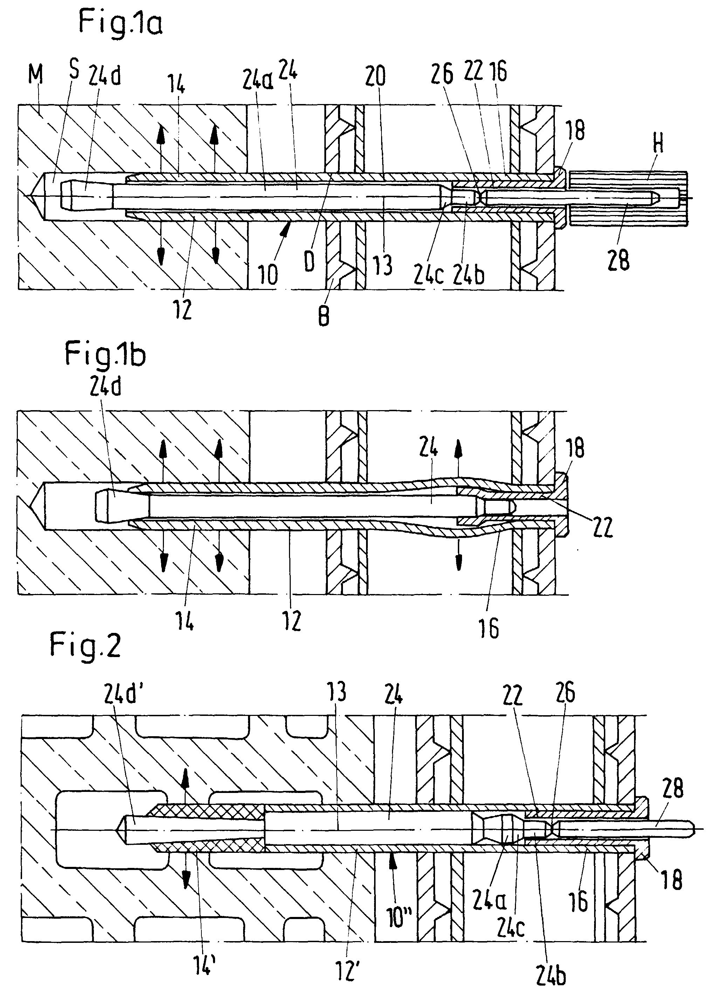

In den Fig. 1a und b ist ein erstes Ausführungsbeispiel eines erfindungsgemäßen Befestigungsankers 10 sowie die Vorgehensweise bei seiner Verwendung gezeigt. Der Befestigungsanker 10 weist einen langgestreckten, hohlen Befestigungskörper 12 mit einem Ankerabschnitt 14 zum Fixieren des Befestigungsankers 10 in einem Mauerwerk M einer abschnittsweise dargestellten Wand und einen Halteabschnitt 16 zum Fixieren eines Bauelements B auf. Am offenen Ende des Halteabschnitts 16 ist eine Hülse 22 in den Befestigungskörper 12 eingeschoben. Den Befestigungskörper 12 durchzieht ein parallel zu dessen Längsachse 13 verlaufender Schlitz 20, so daß der Befestigungskörper 12 einen im wesentlichen C-förmigen Querschnitt aufweist. Die Hülse 22 liegt mit ihrem Flansch 18 sowohl an diesem als - im Einbauzustand - an der Außenfläche des Bauelements B an. Der Durchmesser des Flansches 18 in der Hülse 22 ist größer als der über seine Länge gleichbleibende Durchmesser des rohrförmigen, aber längsgeschlitzten Befestigungskörpers 12.

Im Innern des rohrförmigen Befestigungskörpers 12 ist - vor dem Einbau und in der vorläufigen Einbaulage - koaxial mit der ebenfalls rohrförmigen Hülse 22 ein Aufweitkörper 24 derart eingesetzt, daß er sich mit seinem kegelstumpfförmigen Abschnitt 24c und einem zylindrischen Abschnitt 24a in unmittelbarem Anschluß an das innere Ende der Hülse 22 im Halteabschnitt 16 des Befestigungskörpers 12 befindet. Ein zylindrischer Abschnitt 24b kleineren Durchmessers ragt in die Hülse 22 hinein. Das dem zylindrischen Abschnitt 24a größeren Durchmessers entgegen gesetzte Ende des zylindrischen Abschnitts 24b ist über eine Sollbruchstelle 26 mit einer zylindrischen Zugstange 28 verbunden, welche in der vorläufigen Einbaulage gemäß Fig. 1 a aus dem Befestigungsanker 10 hinausragt.

Die Anbringung eines Bauelements B am Mauerwerk M geschieht - unter Bezugnahme auf die Fig. 1a und b - wie folgt:

Zunächst wird in das Mauerwerk M ein Sackloch S gebohrt. In dieses wird der Ankerabschnitt 14 eines zuvor in das Bauelement B gesteckten Befestigungskörpers 12 eines Befestigungsankers 10 gesteckt; im Beispiel besteht das Bauelement B aus dem Hohlprofil-Blendrahmen eines Fensters und das den Befestigungsanker 10 führende Durchgangsloch D kann werksseitig vorgesehen worden sein. Der Befestigungskörper 12 wird mit seinem Ankerabschnitt 14 so weit in das Sackloch S eingeschoben, daß der Flansch 18 der Hülse 22 an der Außenfläche des Bauelements B anliegt. Bei dem Einschieben des Ankerabschnitts 14 wurde der Befestigungskörper 12, weil sein Außendurchmesser etwas größer als der des Sackloches S ist, ein wenig elastisch verformt und liegt mit der von der Rückstellkraft bewirkten Reibung im Sackloch S am Mauerwerk M an. Das Eintreiben des Befestigungskörpers 12 kann beispielsweise mit einer Hilfshülse H erfolgen, welche die Stange 28 berührungsfrei übergreift und mit ihrer dem Bauelement B zugewandten Stirnseite am Flansch 18 der Hülse 22 angelegt werden kann, damit alsdann mit einem Hammer oder ähnlichen Werkzeug das Eintreiben bis zu dem in Fig. 1 a gezeigten Zustand vorgenommen werden kann.

Nach Entfernen der Hilfshülse H wird an der Stange 28 ein Zugwerkzeug der vom Blindnieten bekannten Art angesetzt und die Stange 28 aus der Hülse 22 und damit dem Befestigungskörper 12 herausgezogen. Dies zwingt den kegelstumpfförmigen Abschnitt 24c und anschließend den zylindrischen Abschnitt 24a in die Hülse 22 hinein, welche sich unter plastischer Verformung aufweitet und auch den im wesentlichen rohrförmigen Befestigungskörper 12 radial verformt. Schließlich wird die Zugkraft an der Stange 28 so groß, daß sie sich an der Sollbruchstelle 26 vom Aufweitkörper 24 löst, der inzwischen in die Hülse 22 eingedrungen ist; Fig. 1b zeigt die davon bewirkte Aufweitung sowohl der Hülse 22 als auch des Befestigungskörpers 12. Diese Aufweitung des Befestigungskörpers 12 im Halteabschnitt 16 führt zu einer formschlüssigen Fixierung des Bauelements B und damit dessen Relativlage gegenüber dem Mauerwerk M.

Der zylindrische Abschnitt 24a des Aufweitkörpers 24 überragt das Ende des Befestigungskörpers 12 am Ankerabschnitt 14 und weist dort einen weiteren sich kegelstumpfförmig erweiternden Abschnitt 24d auf, dessen größter Durchmesser größer als der Innendurchmesser des Befestigungskörpers 12 ist. Beim 'Blindniet'-Vorgang, d.h. beim Herausziehen der Stange 28 nach dem Ausrichten des Bauelements B gegenüber dem Mauerwerk M, wird daher nicht nur die Hülse 22 und mit dieser der Befestigungskörper 12 im Halteabschnitt 16 von den Abschnitten 24c und 24a des Aufweitkörpers 24 aufgeweitet, sondern auch der Befestigungskörper 12 im Ankerabschnitt 14 durch den Abschnitt 24d des Aufweitkörpers 24. Auf diese Weise wird der Kraftschluß des Befestigungskörpers 12 gegenüber dem Mauerwerk M vergrößert. Bei diesem Ausführungsbeispiel des Befestigungsankers könnte - obwohl vorgesehen - der Längsschlitz 20 des Befestigungskörpers 12 entfallen.

Beim weiteren Ausführungsbeispiel gemäß Fig. 2 wird der Ankerabschnitt 14' von einem aus elastischem Material bestehenden Ansatz am Befestigungskörper 12' gebildet. Der Abschnitt 14' hat eine sich zum freien Ende hin erweiternde Axialbohrung, in die wiederum ein kegelstumpfförmiger Abschnitt 24d' des Aufweitkörpers 24 greift. Der Abschnitt 24d' hat einen deutlich geringeren Steigungswinkel als der Abschnitt 24d in Fig. 1, so daß er beim Aufweitvorgang durch Ziehen an der Stange 28 geringer expandiert und im übrigen mit geringerer Kraft am Mauerwerk anliegt. Diese Ausführungsform des Befestigungsankers 10 eignet sich daher - wie dargestellt-insbesondere für druckempfindliches Mauerwerk, nämlich solchem aus porösem Material o. dgl.

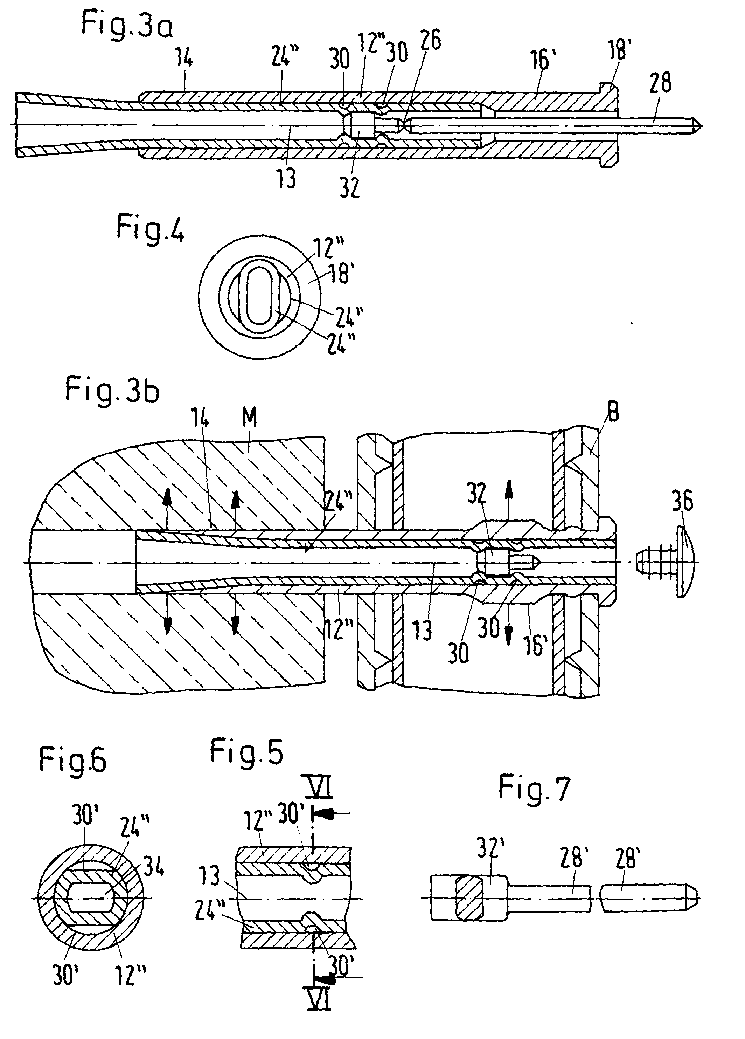

Die in den Fig. 3a und b dargestellte Ausführungsform des Befestigungsankers 10 nutzt zwar ebenfalls das funktionale Prinzip des Blindnietens, unterscheidet sich aber von den zuvor beschriebenen Ausführungsformen in mehrfacher Hinsicht. So ist der Flansch 18' Teil des Befestigungskörpers 12", der ungeschlitzt ist und in einem Teil des Halteabschnitts 16' im Anschluß an den Flansch 18' eine größere Wanddicke aufweist, derart, daß in diesem Teil des Abschnitts 16' die axiale Durchgangsöffnung des Befestigungskörpers 12" geringer ist als über dessen restliche Länge. Über diese restliche Länge ist vom anderen Ende des Befestigungskörpers 12" her ein Aufweitkörper 24" eingeschoben, welcher über das genannte Ende des Ankerabschnitts 14 hinausragt. Im - vor dem Einbau - eingeschobenen Bereich entspricht der Außendurchmesser des hülsenförmigen Aufweitkörpers 24" dem Innendurchmesser des Befestigungskörpers 12" in diesem Bereich; im letzteren überragenden Bereich ist - bei gleichem Ursprungsdurchmesser - der hülsenförmige Aufweitkörper 24" jedoch zur Ovalform abgeplattet (Fig. 4), so daß sein Außendurchmesser in Richtung der langen Ovalachse den Innendurchmesser des Befestigungskörpers 12" im Bereich des Ankerabschnitts 14 deutlich überragt.

Mehr zum anderen Ende des hülsenförmigen Aufweitkörpers 24" hin ist dieser mit beabstandeten Einkerbungen 30 versehen, bei denen es sich um punktuelle Vertiefungen oder auch um quer zur Längsachse 13 sowie parallel zueinander verlaufende Kerben (vgl. Fig. 5, 6) handeln kann. Die Vertiefungen 30 verriegeln zwischen sich ein Betätigungselement 32, mit dessen Hilfe der hülsenförmige Aufweitkörper 24" relativ zum Befestigungskörper 12" in Richtung der Achse 13 längsverschoben werden kann. Am Betätigungselement 32 sitzt die Zugstange 28, und zwischen beiden ist wiederum eine Sollbruchstelle 26 vorgesehen.

Wird nach dem Ausrichten des Bauelements B gegenüber dem Mauerwerk M (o. dgl.) die Zugstange 28 herausgezogen, nimmt sie mit Hilfe des Betätigungselements 32 und der Vertiefungen 30 den hülsenförmigen Aufweitkörper 24" mit. Dessen Vorderende weitet den verdickten Teil des Halteabschnitts 16' des Befestigungskörpers 12" radial auf, und entsprechendes geschieht mit dem Ankerabschnitt 14 des Befestigungskörpers 12" dadurch, daß der zum Oval abgeplattete Endabschnitt des hülsenförmigen Aufweitkörpers 24" in den Befestigungskörper 12" hineingezogen wird.

Die Fig. 5 bis 7 veranschaulichen eine Variante der Verriegelung des Betätigungselements 32 im hülsenförmigen Aufweitkörper 24" dahingehend, daß ein Kerbenpaar 30' (oder ggf. deren zwei im Abstand voneinander) im hülsenförmigen Aufweitkörper 24" eine Durchgangsöffnung 34 gemäß Fig. 6 freilassen und das Betätigungselement 32' gemäß Fig. 7 einen entsprechenden Querschnitt aufweist, so daß es von außen durch die Öffnung 34 hindurch gesteckt und durch Drehen um 90° hinter den Kerben 30' verriegelt werden kann. Wie Fig. 7 ferner zeigt, setzt die Stange 28' unmittelbar und ohne Sollbruchstelle 26 am Betätigungselement 32' an. Auf diese Weise läßt sich das Betätigungselement 32' mit der Stange 28', nachdem der hülsenförmige Aufweitkörper 24" in die in Fig. 5 dargestellte Lage gebracht wurde, aus dem Aufweitkörper 24" nach dem Entriegeln herausziehen und wiederverwenden; ein Kunststoffstopfen 36 verschließt den Befestigungsanker 10.

## Patentansprüche

1. Befestigungsanker zum Anbringen eines Bauelements, insbesondere eines Fensterrahmens, an einer Wand oder dgl., mit einem im wesentlichen rohrförmig zylindrischen Befestigungskörper (12), der im Bereich seines ersten Endes einen Ankerabschnitt (14) zur Verankerung in der Wand (M) und im Bereich seines zweiten Endes einen Halteabschnitt (16) zum Halten des Bauelements (B) sowie in seinem Inneren Mittel (Aufweitkörper 24) aufweist, durch deren axiale Längsverschiebung der Befestigungskörper (12) sowohl im Bereich des Halteabschnitts (16) als auch im Bereich des Ankerabschnitts (14) im wesentlichen radial aufweitbar ist, wobei die Aufweitmittel eine mit Aufweitkörpern (24) verbundene, in der Einbaulage durch ein Werkzeug beaufschlagbare Stange (28) enthalten,
**dadurch gekennzeichnet,** daß die Stange (28) eine Zugstange und der Befestigungskörper (12) mit den Aufweitkörpern (24) im Halteabschnitt (16) blindnietartig (Sollbruchstelle 26) ausgebildet ist.

2. Befestigungsanker nach Anspruch 1,
**dadurch gekennzeichnet,** daß im Halteabschnitt (16) zwischen dem Befestigungskörper (12) und der Stange (28) eine Hülse (22) angeordnet ist, welche die Durchmesserdifferenz zwischen dem Aufweitkörper (24) und dem Befestigungskörper (12) darstellt.

3. Befestigungsanker nach Anspruch 1 oder 2,
**dadurch gekennzeichnet,** daß die Zugstange (28) im Ausgangszustand den Ankerabschnitt (14) des Befestigungskörpers (12) überragt und einen sich kegelstumpfförmig erweiterten Abschnitt (24d) aufweist, dessen größter Durchmesser größer als der Innendurchmesser des Befestigungskörpers (12) ist.

4. Befestigungsanker nach Anspruch 3,
**dadurch gekennzeichnet,** daß der Ankerabschnitt (14') des Befestigungskörpers (12) von einem aus elastischem Material bestehenden Ansatz gebildet ist.

5. Befestigungsanker zum Anbringen eines Bauelements, insbesondere eines Fensterrahmens, an einer Wand oder dgl., mit einem im wesentlichen rohrförmig zylindrischen Befestigungskörper (12), der im Bereich seines ersten Endes einen Ankerabschnitt (14) zur Verankerung in der Wand (M) und im Bereich seines zweiten Endes einen Halteabschnitt (16) zum Halten des Bauelements (B) sowie in seinem Inneren Mittel (Aufweitkörper 24) aufweist, durch deren axiale Längsverschiebung der Befestigungskörper (12) sowohl im Bereich des Halteabschnitts (16) als auch im Bereich des Ankerabschnitts (14) im wesentlichen radial aufweitbar ist, wobei die Aufweitmittel eine mit Aufweitkörpern (24) verbundene, in der Einbaulage durch ein Werkzeug beaufschlagbare Stange (28) enthalten,
**dadurch gekennzeichnet,** daß die Stange (28) eine Zugstange und diese mit einer die Aufweitmittel bildenden Hülse (24") zu gemeinsamer Längsverschiebung verriegelt ist.

6. Befestigungsanker nach Anspruch 5,
**dadurch gekennzeichnet,** daß die Verriegelung (Kerben 30') lösbar und die Stange (28') aus der Hülse (24") herausziehbar ist.

7. Befestigungsanker nach Anspruch 5 oder 6,
**dadurch gekennzeichnet,** daß der der Zugstange (28, 28') gegenüberliegende, im Ausgangszustand den Befestigungskörper (12") überragende Endbereich des hülsenförmigen Aufweitkörpers (24") zur Ovalform abgeplattet ist, wobei die lange Ovalachse größer ist als der Innendurchmesser des Befestigungskörpers (12").

## Claims

1. Fastening anchor for attaching a building element, in particular a window frame, to a wall or the like, having a substantially tubular-cylindrical fastening body (12) which in the region of its first end has an anchoring portion (14) for anchoring in the wall (M) and in the region of its second end has a supporting portion (16) for supporting the building element (B), and in its interior has means (expanding bodies 24), through the axial longitudinal displacement of which the fastening body (12) is substantially radially expandable both in the region of the supporting portion (16) and in the region of the anchoring portion (14), the expanding means including a rod (28) connected to expanding bodies (24) and capable, in the installed position, of being subjected to the action of a tool, characterized in that the rod (28) is a pull rod and the fastening body (12) is constructed in the manner of a blind rivet (predetermined breaking point 26) by means of the expanding bodies (24) in the supporting portion (16).

2. Fastening anchor according to Claim 1, characterized in that a sleeve (22) is arranged in the supporting portion (16) between the fastening body (12) and the rod (28), the sleeve (22) constituting the difference in diameter between the expanding body (24) and the fastening body (12).

3. Fastening anchor according to Claim 1 or 2, characterized in that the pull rod (28) in the initial state projects beyond the anchoring portion (14) of the fastening body (12) and has a frustoconically widened portion (24d), the greatest diameter of which is greater than the inside diameter of the fastening body (12).

4. Fastening anchor according to Claim 3, characterized in that the anchoring portion (14') of the fastening body (12) is formed by an attachment consisting of elastic material.

5. Fastening anchor for attaching a building element, in particular a window frame, to a wall or the like, having a substantially tubular-cylindrical fastening body (12) which in the region of its first end has an anchoring portion (14) for anchoring in the wall (M) and in the region of its second end has a supporting portion (16) for supporting the building element (B), and in its interior has means (expanding bodies 24), through the axial longitudinal displacement of which the fastening body (12) is substantially radially expandable both in the region of the supporting portion (16) and in the region of the anchoring portion (14), the expanding means including a rod (28) connected to expanding bodies (24) and capable, in the installed position, of being subjected to the action of a tool, characterized in that the rod (28) is a pull rod and the pull rod is locked to a sleeve (24") forming the expanding means for joint longitudinal displacement.

6. Fastening anchor according to Claim 5, characterized in that the lock (notches 30') is releasable and the rod (28') can be withdrawn from the sleeve (24").

7. Fastening anchor according to Claim 5 or 6, characterized in that the end region of the sleeve-shaped expanding body (24") located opposite the pull rod (28, 28') and in the initial state projecting beyond the fastening body (12") is flattened to an oval shape, the long oval axis being greater than the inside diameter of the fastening body (12").

## Revendications

1. Bouton d'ancrage pour la pose d'un élément de construction, en particulier d'un châssis de fenêtre, contre un mur ou similaires, comportant un corps de fixation (12) cylindrique sensiblement en forme de tube qui, dans la zone de sa première extrémité, présente une section d'ancrage (14) pour l'ancrage dans la paroi (M) et, dans la zone de sa seconde extrémité, une section de maintien (16) pour le maintien de l'élément de construction (B) et qui, à l'intérieur, présente des moyens (corps élargisseur 24) dont le déplacement longitudinal axial permet au corps de fixation (12) de s'élargir sensiblement radialement aussi bien dans la zone de la section de maintien (16) que dans la zone de la section d'ancrage (14), les moyens élargisseurs comportant une barre (28) assemblée avec les corps élargisseurs (24) et pouvant être sollicitée par un outil en position d'insertion, caractérisé en ce que la barre (28) est une barre de traction et en ce que le corps de fixation (12) avec les corps élargisseurs (24) dans la section de maintien (16) est réalisé sous forme de rivetage aveugle (point de rupture théorique 26).

2. Bouton d'ancrage selon la revendication 1, caractérisé en ce que, dans la section de maintien (16) entre le corps de fixation (12) et la barre (28) est disposé un manchon (22) qui représente la différence de diamètre entre le corps élargisseur (24) et le corps de fixation (12) .

3. Bouton d'ancrage selon la revendication 1 ou 2, caractérisé en ce que la barre de traction (28) dépasse, à l'état initial, de la section d'ancrage (14) du corps de fixation (12) et présente une section (24d) qui s'élargit de façon tronconique et dont le plus grand diamètre est supérieur au diamètre intérieur du corps de fixation (12).

4. Bouton d'ancrage selon la revendication 3, caractérisé en ce que la section d'ancrage (14') du corps de fixation (12) est formée par un épaulement en matière élastique.

5. Bouton d'ancrage pour l'application d'un élément de construction, en particulier d'un châssis de fenêtre, contre un mur ou similaires, comportant un corps de fixation (12) cylindrique sensiblement en forme de tube qui, dans la zone de sa première extrémité, présente une section d'ancrage (14) pour l'ancrage dans la paroi (M) et, dans la zone de sa seconde extrémité, une section de maintien (16) pour le maintien de l'élément de construction (B) et qui, à l'intérieur, présente des moyens (corps élargisseur 24) dont le déplacement longitudinal axial permet au corps de fixation (12) de s'élargir sensiblement radialement aussi bien dans la zone de la section de maintien (16) que dans la zone de la section d'ancrage (14), les moyens élargisseurs comportant une barre (28) assemblée avec les corps élargisseurs (24) et pouvant être sollicitée par un outil en position d'insertion, caractérisé en ce que la barre (28) est une barre de traction et en ce que celle-ci est verrouillée par un manchon (24") formant les moyens élargisseurs en vue d'un déplacement longitudinal commun.

6. Bouton d'ancrage selon la revendication 5, caractérisé en ce que le verrouillage (encoches 30') est débrayable et en ce que la barre (28') peut être extraite du manchon (24").

7. Bouton d'ancrage selon la revendication 5 ou 6, caractérisé en ce que la zone terminale du corps élargisseur (12") en forme de manchon, à l'opposé de la barre de traction (28, 28') et dépassant le corps de fixation (12") à l'état initial, est aplatie selon une forme ovale, l'axe longitudinal de l'ovale étant supérieur au diamètre intérieur du corps de fixation (12").
